# EUROPÄISCHE PATENTSCHRIFT

(11) **EP 0 557 728 B1**
(45) Veröffentlichungstag und Bekanntmachung des Hinweises auf die Patenterteilung: **27.03.1996**
(21) Anmeldenummer: 93101141.5
(22) Anmeldetag: 26.01.1993
(51) Int. Cl.: B23Q 3/157

(54) **Flexibles Fertigungssystem**
Flexible manufacturing system
Système de fabrication flexible

(30) Priorität: 26.02.1992 DE 4205833; 25.04.1992 DE 4213684
(43) Veröffentlichungstag der Anmeldung: 01.09.1993
(73) Patentinhaber: DÖRRIES SCHARMANN GmbH, D-41236 Mönchengladbach (DE)
(72) Erfinder: Kohler, Paul, Dr., W-7920 Heidenheim (DE)
(74) Vertreter: Rehders, Jochen, Dipl.-Ing.

(56) Entgegenhaltungen:
- DE-A- 2 536 671
- DE-A- 4 022 996
- FR-A- 1 556 094
- GB-A- 1 065 322

## Beschreibung

Die Erfindung betrifft ein flexibles Fertigungssystem sowie ein Verfahren zum Werkzeugwechseln im flexiblen Fertigungssystem mit einer Werkzeugwechseleinheit an einer Werkzeugmaschine zum Entnehmen eines Werkzeugs aus einem zur Werkzeugmaschine benachbarten Hochregal-Werkzeugmagazin, zum Abgeben des Werkzeugs an die Werkzeugmaschine, zum Entnehmen eines gebrauchten Werkzeugs aus der Werkzeugmaschine und zum Zurückführen des gebrauchten Werkzeugs in das Werkzeugmagazin.

Ein derartiges flexibles Fertigungssystem ist in der deutschen Offenlegungsschrift 40 22 996 beschrieben.

Werkzeugwechseleinheiten werden an flexiblen Fertigungssystemen, z. B. Bearbeitungszentren eingesetzt, und dienen dazu, vollautomatisch die unterschiedlichsten Werkzeuge, wie Drehstähle, Bohrer, Fräser, Gewindebohrer und dgl. für den jeweils durchzuführenden Bearbeitungsvorgang an die Werkzeugmaschine zu übergeben und das jeweils nicht mehr benötigte Werkzeug aus der Werkzeugmaschine zu entnehmen und in einem Werkzeugmagazin abzulegen. Bei einem in der deutschen Patentschrift 35 21 285 beschriebenen flexiblen Fertigungssystem befindet sich an jeder Werkzeugmaschine ein drehbarer Wechselteller, von dem das jeweilig benötigte Werkzeug mittels eines Wechselarms entnommen und in die Werkzeugaufnahme eingesetzt wird, wobei dieser Wechselarm ebenfalls dazu dient, das nicht mehr gebrauchte Werkzeug aus der Werkzeugaufnahme zu entnehmen und in den Wechselteller einzusetzen.

Diese Wechselteller haben nur eine begrenzte Aufnahmekapazität für etwa zweiunddreißig Werkzeuge, so daß hinter den Werkzeugmaschinen zusätzliche Regalmagazine angeordnet sind, wobei zwischen dem Regalmagazin und dem Wechselteller ein Werkzeugroboter angeordnet ist, der das Auswechseln von Werkzeugen zwischen den Regalmagazinen und dem Wechselteller vornimmt.

Bei dieser bekannten Werkzeugwechseleinheit werden nach Beendingung eines Bearbeitungsvorganges gleichzeitig ein nicht mehr gebrauchtes Werkzeug aus der Werkzeugaufnahme der Werkzeugmaschine und ein neues Werkzeug aus dem Wechselteller entnommen. Anschließend wird der Wechselarm um 180° gedreht, so daß sich nunmehr das neue Werkzeug in die Werkzeugaufnahme und das nicht mehr gebrauchte Werkzeug in den Wechselteller einsetzen lassen. Während dieser Wechselvorgang relativ schnell abläuft, dauert es demgegenüber verhältnismäßig lange, bis ein neues Werkzeug in den Bereich des Wechselarms gedreht ist, da der Wechselteller für die vorgesehene Anzahl unterschiedlicher Werkzeuge einen großen Durchmesser aufweisen muß, so daß dadurch und aufgrund der großen Masse der am Wechselteller angeordneten Werkzeuge keine hohe Drehgeschwindigkeit des Wechseltellers möglich ist. Zwar ist dann ein schneller Wechsel möglich, wenn das neue Werkzeug unmittelbar benachbart zum nicht mehr gebrauchten Werkzeug auf dem Wechselteller angeordnet ist, jedoch ist dies nicht der Regelfall, vielmehr kann die Suche nach einem neuen Werkzeug über eine halbe Umdrehung des Wechseltellers vor sich gehen.

Um nun wenigstens die Kapazität der an der Werkzeugmaschine bereitgehaltenen Werkzeuge zu erhöhen, hat man bereits Kettenmagazine, wie in der deutschen Patentschrift 37 15 874 dargestellt, vorgeschlagen. Da derartige Kettenmagazine eine noch höhere Masse als die Wechselteller besitzen, kann die Bewegung eines Kettenmagazins mithin nur noch langsamer erfolgen.

Der Erfindung liegt die Aufgabe zugrunde, ein flexibles Fertigungssystem mit einer verbesserten Werkzeugwechseleinheit an einer Werkzeugmaschine zu schaffen, mit der sich bei großer Kapazität für die bereitzuhaltenden Werkzeuge ein erheblich beschleunigter Werkzeugwechsel durchführen läßt.

Ausgehend von dieser Aufgabenstellung wird erfindungsgemäß ein flexibles Fertigungssystem mit einer Werkzeugmaschine, einem zur Werkzeugmaschine benachbarten Hochregal-Werkzeugmagazin, einem ein Werkzeug aus dem Hochregal-Werkzeugmagazin entnehmenden und zurücklegenden Werkzeugroboter und einer Werkzeugwechselvorrichtung mit einem vom Übergabebereich des Werkzeugroboters bis zur Werkzeugaufnahme der Werkzeugmaschine bewegbaren Werkzeughalter, bei dem die Werkzeugwechselvorrichtung aus zwei im Bereich des Werkzeugroboters quer verschiebbaren Werkzeugschlitten und einem Werkzeughalter für ein Werkzeug an jedem Werkzeugschlitten besteht, vorgeschlagen. Bei dem erfindungsgemäßen Fertigungssystem entfällt somit ein unmittelbar an der Werkzeugmaschine angeordnetes Werkzeugmagazin. Die im Hochregal-Werkzeugmagazin angeordneten Werkzeuge werden durch die Werkzeugwechseleinheit aus dem Magazin entnommen und in dieses zurückgelegt, ohne daß sich das Magazin selber mit den Werkzeugen bewegen muß. Dadurch entfallen die bei den bekannten an jeder Werkzeugmaschine angeordneten Werkzeugmagazinen auftretenden Massenkräfte, so daß der Werkzeugwechsel erheblich schneller vonstatten gehen kann.

Während mittels des Werkzeughalters eines Werkzeugschlittens ein Werkzeug in die Werkzeugaufnahme an der Werkzeugmaschine eingesetzt wird, oder sich der Werkzeughalter während eines Bearbeitungsvorgangs in einer Wartestellung befindet, kann der Werkzeughalter am anderen Werkzeugschlitten bereits durch den Werkzeugroboter mit einem aus dem Hochregal-Werkzeugmagazin entnommenen Werkzeug bestückt werden, so daß sofort nach Beendigung eines Bearbeitungsvorganges und Entnahme des nicht mehr benötigten Werkzeugs ein neues Werkzeug in die Werkzeugaufnahme an der Werkzeugmaschine eingesetzt werden kann.

Der Bewegungsablauf der Werkzeugwechseleinheit aus dem Werkzeugroboter und der Werkzeugwechselvorrichtung kann aufgrund der geringen bewegten Massen sehr schnell ablaufen, so daß sich bei Verwendung in Verbindung mit einer kombinierten Senkrechtdrehmaschine und Fräsmaschine eine Verkürzung der Werkzeugwechselzeit von üblichen 45 Sekunden auf etwa 15 Sekunden erreichen läßt.

Die Werkzeugwechselvorrichtung kann wenigstens einen endlos umlaufenden Steuerkettentrieb für wenigstens eine von den beiden mit dem Steuerkettentrieb kuppelbaren, von einer Werkzeugaufnahme- und -abgabestellung im Bereich des Werkzeugmagazins in eine Werkzeugaufnahme an einer Werkzeugmaschine auf Führungsschienen verfahrbaren Werkzeugschlitten mit dem Werkzeughalter und Mitnehmern am Steuerkettentrieb sowie mit den Mitnehmern zusammenwirkende, in den Endstellungen des jeweils von der Steuerkette bewegten Werkzeugschlittens auskuppelnden und verriegelnden sowie in der Transportstellung einkuppelnden Kupplungs- und Verriegelungsmittel an den Werkzeugschlitten aufweisen.

Mittels des Steuerkettentriebs, der sich auf einfachste Weise mechanisch durch einen Hydraulik- oder Elektromotor, vorzugsweise durch einen Schrittmotor antreiben läßt, läßt sich ein einzelnes Werkzeug jeweils mit großer Geschwindigkeit vom Bereich des Werkzeugmagazins in den Bereich der Werkzeugaufnahme an der Werkzeugmaschine transportieren und wieder zurückbringen, ohne daß große Massen, außer dem Werkzeugschlitten und dem Werkzeug selber, beschleunigt werden müssen.

Im Bereich des Werkzeugmagazins ist der Werkzeugroboter angeordnet, der aus dem Werkzeugmagazin ein Werkzeug entnimmt, in den Werkzeughalter des Werkzeugschlittens bringt und daraus entnimmt, um es in das Werkzeugmagazin zurückzulegen. Im Bereich der Werkzeugaufnahme einer Werkzeugmaschine genügt es, wenn sich der Werkzeugschlitten bis zur Werkzeugaufnahme bewegt und diese Werkzeugaufnahme selber das Werkzeug aus dem Werkzeughalter entnimmt.

Vorzugsweise können jedoch die Mitnehmer am Steuerkettentrieb aus seitlich oder senkrecht vorstehenden Zapfen oder Blöcken und die Kupplungs- und Verriegelungsmittel aus an den Werkzeugschlitten angelenkten Schwenkgabeln mit einem quer angeordneten, in den Endstellungen des Werkzeugschlittens einseitig in eine Verriegelungsraste der Führungsschiene einfallenden und sich dabei vom Steuerkettentrieb auskuppelnden, sowie sich in der Transportstellung der Werkzeugschlitten beidseitig auf der Führungsschiene im wesentlichen spielfrei abstützenden Verriegelungsarmpaaren bestehen. Durch diese Anordnung bleiben die Werkzeugschlitten in den Endstellungen verriegelt stehen, während der Steuerkettentrieb von den Werkzeugschlitten entkuppelt ist und weiter laufen kann, um andere Funktionen zu steuern.

Diese weiteren Funktionen lassen sich dadurch erreichen, daß der Steuerkettentrieb einen waagerechten, zur Führungsschiene für die Werkzeugschlitten mit den Werkzeughaltern parallelen Kettentrum und einen senkrechten, mit wenigstens einem weiteren, mit einem Lenkerparallelogramm für die Werkzeugschlitten mit den Werkzeughaltern zusammenwirkenden Klinkenschlitten kuppelbaren Kettentrum aufweist. Bei dieser Anordnung läuft der Steuerkettentrieb nach der Verschiebung des jeweiligen Werkzeugschlittens weiter und bewirkt über die Bewegung des Lenkerparallelogramms, daß der jeweilige Werkzeugschlitten mit dem Werkzeughalter in den Bereich der Werkzeugaufnahme an der Werkzeugmaschine geschwenkt wird, so daß sich die Werkzeugaufnahme an der Werkzeugmaschine zur Übernahme eines neues Werkzeugs nicht zu bewegen braucht.

Vorzugsweise kann das Lenkerparallelogramm aus zwei parallelen, einerseits an ortsfesten Trägern schwenkbaren und andererseits an einem Führungsschienenteil angelenkten Hebeln bestehen, wovon wenigstens ein Hebel über einen Winkelarm und eine Kuppelstange mit dem weiteren, senkrecht verschiebbaren Klinkenschlitten gekuppelt ist. Um eine sichere Führung und Bewegung des Lenkerparallelogramms über eine Schwenkwinkel von 90° hinaus zu erreichen, können beide Hebel im Bereich der ortsfesten Anlenkung parallele, mittels einer Kuppelstange verbundene Winkelarme aufweisen. Diese Winkelarme übernehmen die Parallelführung, wenn das Führungsschienenteil und die beiden Hebel des Lenkerparallelogramms waagerecht fluchtend verschwenkt sind.

Je nachdem welche Art von Werkzeugen in die Werkzeugaufnahme an der Werkzeugmaschine eingesetzt werden und abhängig von der Art, wie die Werkzeughalter an den verfahr- und verschwenkbaren Werkzeugschlitten ausgebildet sind, kann es vorteilhaft sein, die jeweiligen Werkzeugschlitten nach dem Einsetzen eines Werkzeugs in die Werkzeugaufnahme an der Werkzeugmaschine waagerecht zurückzufahren, um die Werkzeughalter am Werkzeugschlitten aus dem Bereich des Werkzeuges herauszubewegen. Dies läßt sich durch einen weiteren, endlos umlaufenden, mit dem ersten Steuerkettentrieb gekuppelten Steuerketten-Nebenantrieb mit einem waagerechten mit dem Werkzeugschlitten mit dem Werkzeughalter in der Werkzeugabgabe- und -aufnahmestellung im Bereich der Werkzeugaufnahme an der Werkzeugmaschine kuppelbaren Kettentrum erreichen. Mittels dieses Steuerketten-Nebenantriebs läßt sich der auf dem Führungsschienenteil des Lenkerparallelogramms verriegelte Werkzeugschlitten entriegeln und in eine Stellung zurückfahren, in der sich der Werkzeughalter am Werkzeugschlitten nicht mehr im Bereich des in die Werkzeugaufnahme an der Werkzeugmaschine eingesetzten Werkzeugs befindet. Während der Bearbeitung eines Werkstücks mit dem gerade eingesetzten Werkzeug kann der Werkzeugschlitten hochgeschwenkt in einer oberen Wartestellung oder herabgeschwenkt in einer unteren Wartestellung verharren, bis der Bearbeitungsvorgang mit dem gerade eingesetzten Werkzeug beendet ist und dieses Werkzeug wieder aus der Werkzeugaufnahme an der Werkzeugmaschine entnommen wird.

Um den Werkzeugwechsel weiter zu beschleunigen und um insbesondere den Entnahmevorgang aus dem Werkzeugmagazin zeitlich zu verkürzen, können die auf Führungsschienen verfahrbare Werkzeugschlitten mit je einem Werkzeughalter parallel auf einer gemeinsamen Querführung angeordnet sein, wobei die Querbewegung der Werkzeugschlitten durch einen senkrecht geführten, mit dem senkrechten Kettentrum kuppelbaren und mit den beiden Werkzeugschlitten und ihren Führungsschienen über die senkrechte Klinkenschlittenbewegung in eine waagerechte Bewegung der beiden Werkzeugschlitten mit ihren Führungsschienen umlenkende Kupplungsmittel verbundenen, zusätzlichen Klinkenschlitten erreicht wird.

Die Kupplungsmittel können vorzugsweise aus einem parallel zur Querführung angeordneten, mit dieser verbundenen, über zwei parallele Kettenräder geführten Kettentrieb und einer einerseits an einem Kettenrad und andererseits an dem zusätzlichen Klinkenschlitten angreifenden Kuppelstange bestehen. Dabei kann die Kuppelstange unter einem solchen Winkel an dem Kettenrad angelenkt sein, daß dieses bei einer Auf- und Abbewegung des zusätzlichen Klinkenschlittens mit der Kuppelstange einen Totpunkt durchläuft und sich dabei insgesamt um mehr als 180° dreht. Auf diese Weise wird durch eine Auf- und Abbewegung des Klinkenschlittens eine Querbewegung der Werkzeugschlitten mit den Führungsschienen von einer Stellung, in der der eine Werkzeugschlitten mit dem Führungsschienenteil am Lenkerparallelogramm fluchtet, in eine Stellung, in der der andere Werkzeugschlitten mit seinen Führungsschienen mit dem Führungsschienenteil am Lenkerparallelogramm fluchtet, erreicht.

Das Verfahren zum Werkzeugwechseln im flexiblen Fertigungssystem kann darin bestehen, daß mit nur einem Antrieb sämtliche Bewegungen der Werkzeugwechseleinheit steuerbar sind, indem die Mitnehmer an den Steuerkettenantrieben so angeordnet und beabstandet sind und ein Werkzeugaufnahme- und -abgabezyklus, ausgehend von der Werkzeugaufnahme- und -abgabestellung im Bereich des Werkzeugmagazins, in folgenden Schritten abläuft:
- Vorfahren des Werkzeugschlittens mit einem im Werkzeughalter aufgenommenen neuen Werkzeug auf das Führungsschienenteil des Lenkerparallelogramms,
- Hochschwenken des Lenkerparallelogramms mit dem Werkzeugschlitten und mit dem Werkzeughalter und Einsetzen des Werkzeugs in die Werkzeugaufnahme der Werkzeugmaschine,
- Zurückfahren des Werkzeugschlittens auf dem Führungsschienenteil in der oberen Stellung des Lenkerparallelogramms nach Festklemmen des Werkzeugs,
- Herabschwenken des Lenkerparallelogramms mit dem Werkzeugschlitten in eine Wartestellung,
- Hochschwenken des Lenkerparallelogramms mit dem Werkzeugschlitten mit dem Werkzeughalter,
- Vorfahren des Werkzeugschlittens auf dem Führungsschienenteil in der oberen Stellung des Lenkerparallelogramms und Übernahme des gebrauchten Werkzeugs,
- Herabschwenken des Lenkerparallelogramms mit dem Werkzeugschlitten und dem gebrauchten Werkzeug zum Fluchten mit der Führungssschiene an der Querführung,
- Zurückfahren des Werkzeugschlittens mit dem gebrauchten Werkzeug vom Führungsschienenteil des Lenkerparallelogramms auf die Führungsschiene an der Querführung,
- Querverfahren der beiden Werkzeugschlitten in einem Querverschiebwagen an der Querführung bis zum Fluchten eines Werkzeugschlittens mit einem neuen Werkzeug mit dem Führungsschienenteil des Lenkerparallelogramms.

Danach beginnt der vorbeschriebene Ablauf von neuem.

Die Erfindung wird nachstehend anhand eines in der Zeichnung dargestellten Ausführungsbeispiels des näheren erläutert. In der Zeichnung zeigen:

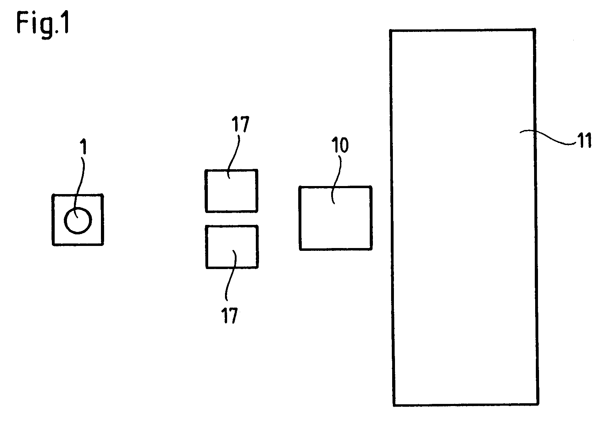

- Fig. 1: eine schematische Draufsicht auf die Anordnung der Werkzeugübergabeeinheit zwischen der Werkzeugaufnahme an einer Werkzeugmaschine und einem Hochregal-Werkzeugmagazin,
- Fig. 2: eine Vorderansicht, teilweise im Schnitt, einer Werkzeugwechselvorrichtung,
- Fig. 3: eine Seitenansicht, teilweise im Schnitt, einer Werkzeugwechselvorrichtung und

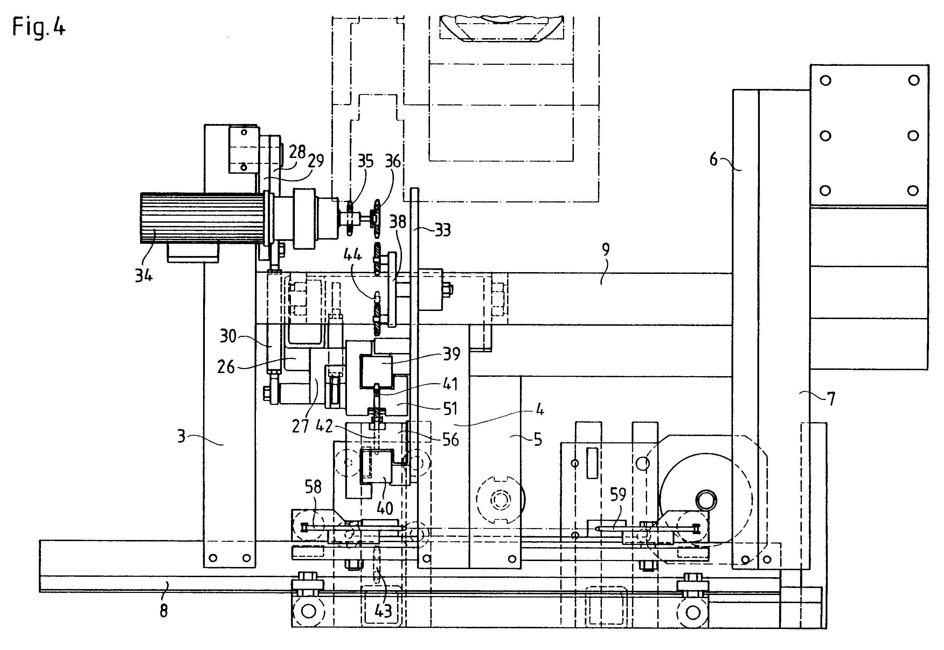

- Fig. 4: eine Draufsicht auf die Werkzeugwechselvorrichtung.

Von einer Werkzeugmaschine ist nur schematisch eine senkrechte Aufnahme 1 für ein Werkzeug 2, wie ein Drehstahl- oder ein Rotationswerkzeug (Bohrer, Fräser), dargestellt, das senkrecht von unten in die Aufnahme 1 eingeführt und dort festgeklemmt wird. Dies wird mittels einer Werkzeugwechselvorrichtung bewirkt, die an einem Gestell angeordnet ist, von dem parallele Längsträger 3, 4, 5, 6, 7 und Querträger 8, 9 dargestellt sind. Die Werkzeugwechselvorrichtung befindet sich zwischen der Werkzeugaufnahme 1 der Werkzeugmaschine und einem Werkzeugroboter 10, der Werkzeuge 2 aus einem Hochregal-Werkzeugmagazin 11 entnimmt bzw. in dieses eingibt und an die Werkzeugwechselvorrichtung abgibt bzw. von dieser annimmt. Der Werkzeugroboter 10 und die Werkzeugwechselvorrichtung bilden eine Werkzeugübergabeeinheit zwischen dem Hochregal-Werkzeugmagazin und der Werkzeugmaschine.

An einem als Querführung ausgebildeten Querträger 8 ist ein querverfahrbarer Querverschiebewagen 12 mittels Rollenführungen 13 im wesentlichen spielfrei und kippgesichert geführt. Die Querbewegung des Querverschiebewagens 12 wird durch Anschläge 14 begrenzt.

An senkrechten Armen 15, die am Querverschiebewagen 12 befestigt sind, sind zwei parallele, waagerechte Führungsschienen 16 befestigt, auf denen zwei Werkzeugschlitten 17 mittels Rollenführungen 18 im wesentlichen spielfrei und kippgesichert geführt sind. An jedem Werkzeugschlitten 17 ist ein Rahmen 18 befestigt, der Werkzeughalter 20 zur Aufnahme eines Werkzeugs 2 aufweist.

An jedem Werkzeugschlitten 17 ist eine Schwenkgabel 21 befestigt, die jeweils ein Verriegelungsarmpaar 22 mit Stützrollen 23 aufweist.

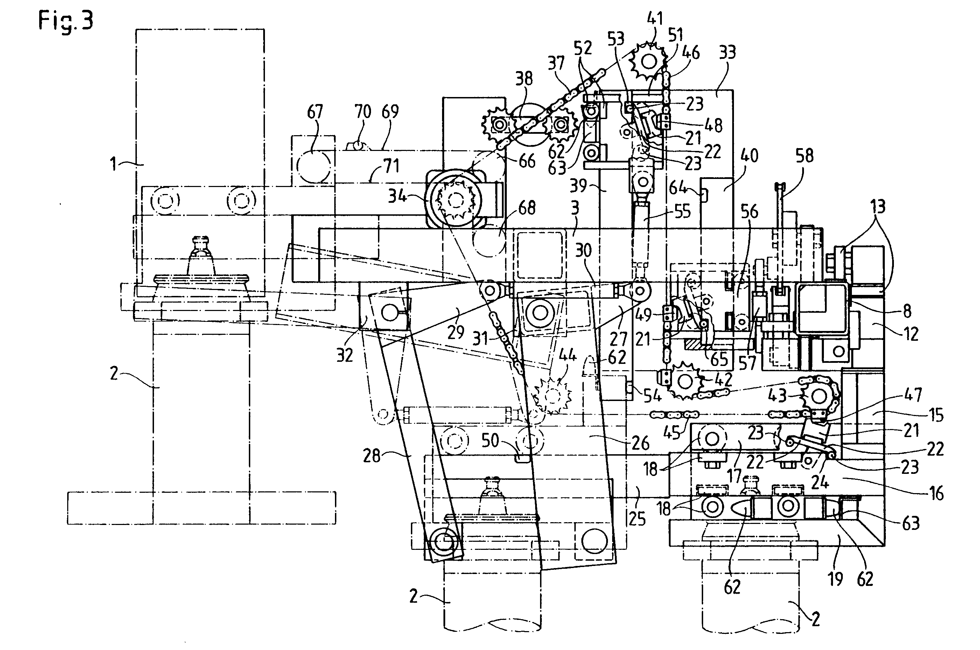

In der in Fig. 3 dargestellten Stellung ist die Schwenkgabel 21 gekippt dargestellt, so daß ein Verriegelungsarm 22 mit seiner Stützrolle 23 in eine Verriegelungsraste 24 an der Führungsschiene 16 eingerastet ist. Dadurch ist die Bewegung des Werkzeugschlitten 17 nach links blockiert. Gleichzeitig liegt ein am Werkzeugschlitten 17 befestigter Anschlagpuffer 62 an einem Anschlagwinkel 63 an der Führungsschiene 16 an, so daß auf diese Weise eine eindeutige Positionierung des Werkzeugschlittens 17 gegeben ist. Fluchtend mit der Führungsschiene 16 ist ein Führungsschienenteil 25 dargestellt, das Teil eines aus parallelen Hebeln 26, 28 gebildeten Lenkerparallelogramms ist. Die zur Anlenkung am Führungsschienenteil 25 entgegengesetzten Enden der Hebel 26, 28 sind an Konsolen 31, 32 angelenkt, die an dem Längsträger 3 bzw. dem Querträger 9 befestigt sind.

Im Bereich der Anlenkpunkte der Hebel 26, 28 an den Konsolen 31, 32 sind Winkelarme 27, 29 angeordnet, die mit den Hebeln 26, 28 drehfest verbunden sind und zu diesen unter einem Winkel von etwa 90° angeordnet sind. Diese Winkelarme 27, 29 sind durch eine Kuppelstange 30 miteinander verbunden, um auch dann noch eine einwandfreie Parallelbewegung der Hebel 26, 28 zu bewirken, wenn sich diese Hebel 26, 28 mit dem Führungsschienenteil 25 in einer im Einzelnen noch zu beschreibenden hochgeklappten und dabei im wesentlichen fluchtenden Stellung befinden.

Eine senkrecht aufragende Lagerplatte 33 ist an dem Längsträger 4 befestigt.

Während ein Antriebsmotor 34 mit zwei Kettenrädern 35, 36 am Längsträger 3 befestigt ist, dient die Lagerplatte 33 zur Lagerung eines Kettenspanners 38, von zwei senkrechten Schlittenführungen 39, 40 und von vier Umlenkritzeln 41, 42, 43, 44 für eine Steuerkette 37, die über das Kettenrad 36 am Antriebsmotor 34 und die bereits genannten Umlenkritzel 41 bis 44 und den Kettenspanner 38 geführt ist. Ein waagerechtes Kettentrum 45 der Steuerkette 37 ist im Bereich der Führungsschiene 16 und des Führungsschienenteils 25 angeordnet, während ein senkrechtes Kettentrum 46 parallel zu den senkrechten Schlittenführungen 39, 40 angeordnet ist. An der Steuerkette 37 sind Mitnehmerblöcke 47, 48, 49 befestigt, deren Funktion weiter unten erläutert wird.

Ein Klinkenschlitten 51 ist mittels einer Rollenführung 52 an der Schlittenführung 39 im wesentlichen spielfrei und kippgesichert geführt und weist ebenfalls eine Schwenkgabel 21 mit einem Verriegelungsarmpaar 22 und Stützrollen 23 auf. Für die Endstellungen des Klinkenschlittens 51 sind in der Schlittenführung 39 Verriegelungsrasten 53, 54 vorgesehen. Eine Kuppelstange 55 ist mit einem Ende an dem Klinkenschlitten 51 und mit dem anderen Ende am Winkelarm 27 des Hebels 26 angelenkt. Auf der Schlittenführung 40 ist ein weiterer Schlitten 56 in ähnlicher Weise wie die übrigen Schlitten im wesentlichen spielfrei und kippgesichert geführt. Auch dieser Klinkenschlitten 56 weist eine Schwenkgabel 21 mit einem Verriegelungsarmpaar 22 und Stützrollen 23 auf. Auf einer Schlittenführung 40 sind die Endstellungen des Klinkenschlittens 56 durch Verriegelungsrasten 64, 65 definiert. Der Klinkenschlitten 56 ist über eine Kuppelstange 57 mit einem Kettenrad 58 gekuppelt, über das eine Rollenkette 60 geführt ist. Diese Rollenkette 60 wird über ein weiteres Kettenrad 59 umgelenkt, wobei die Enden der Rollenkette 60 mittels eines Hebelpaars 61 und elastischen Anschlagpuffern 62, die sich an Anschlagwinkeln 63 abstützen, am Querverschiebewagen 12 befestigt sind.

Die Drehachsen der Kettenräder 58, 59 stehen senkrecht auf den Drehachsen des Antriebsmotors 34 und der davon angetriebenen Steuerkette 35, 37, 38, 41, 42, 43, 44. Dementsprechend verläuft die Bewegungsrichtung der Rollenkette 60 parallel zur Querführung 8.

Ein weiterer Steuerketten-Nebenantrieb aus einem Kettenrad 36 auf dem Antriebsmotor 34 und Umlenkritzeln 66, 67, 68 sowie einer Rollenkette 69 ist im Bereich zwischen dem Antriebsmotor 34 und der Werkzeugaufnahme 1 an der Werkzeugmaschine angeordnet und weist einen Mitnehmerzapfen bzw. Mitnehmerblock 70 auf.

Die Arbeitsweise der erfindungsgemäßen Werkzeugwechselvorrichtung ist folgende:
In der ausgezogen dargestellten Stellung, in der sich der Werkzeugschlitten 17 in seiner Endstellung auf der Führungsschiene 16, der Klinkenschlitten 51 in seiner oberen Stellung, der zusätzlichen Klinkenschlitten 56 in seiner unteren und der Querverschiebewagen 12 in seiner rechten Stellung befinden, fluchtet das Führungsschienenteil 25 mit der Führungssschiene 16.

In dieser Stellung kann der Werkzeugroboter 10 ein gebrauchtes Werkzeug 2 aus dem Werkzeughalter 20 am Werkzeugschlitten 17 entnehmen, in dem Hochregal-Werkzeugmagazin 11 ablegen, daraus ein neues Werkzeug 2 entnehmen und in den Werkzeughalter 20 am Werkzeugschlitten 17 einsetzen. Der Mitnehmerblock 47 befindet sich am waagerechten Kettentrum 45 im Bereich des Umlenkritzels 43 und beginnt seinen Eingriff in die Schwenkgabel 21. Wird der Antriebsmotor 34 im Uhrzeigersinn gedreht, bewegt sich das waagerechte Kettentrum 45 mit dem Mitnehmerblock 47 nach links und schwenkt die Schwenkgabel 21 ebenfalls nach links, bis der Verriegelungsarm 22 mit der Stützrolle 23 aus der Verriegelungsraste 24 ausgehoben ist und sich die gegenüberliegende Stützrolle 23 auf der Führungsschiene 16 abstützt. Nunmehr wird der Werkzeugschlitten 17 durch die angetriebene Kette mit dem Mitnehmerblock 47 nach links bewegt, wobei beide Rollen 23 auf der Oberkante der Führungsschiene abrollen, so daß der Mitnehmerblock 47 nicht außer Eingriff mit der Schwenkgabel 21 gelangen kann.

Der Werkzeugschlitten 17 wird entlang der Führungsschiene 16 bis auf das Führungsschienenteil 25 des Lenkerparallelogramms gefahren, und zwar soweit, bis der linke Verriegelungsarm 22 mit seiner Stützrolle 23 in die Verriegelungsraste 50 im Führungsschienenteil 25 einfällt. Dabei schwenkt die Schwenkgabel 21 nach links und gibt den Mitnehmerblock 47 frei, der sich um das Umlenkrad 44 herum auf das Antriebskettenrad 35 zubewegt.

Nachdem der Mitnehmerblock 47 außer Eingriff mit der Schwenkgabel 22 am Werkzeugschlitten 17 gekommen ist, gelangt ein Mitnehmerblock 48 am senkrechten Kettentrum 46 in Eingriff mit der Schwenkgabel 22 am Klinkenschlitten 51 und bewegt diesen nach unten. Über die Kuppelstange 55 und den Winkelarm 27 wird das aus den Hebel 26, 28 und das Führungsschienenteil 25 gebildete Lenkerparallelogramm verschwenkt, wobei das Werkzeug 2 in die strichpunktierte Stellung im Bereich der Werkzeugaufnahme 1 gelangt und dort festgeklemmt wird.

Um die Werkzeughalter 20 vom Werkzeug 2 zu lösen, wird der Werkzeugschlitten 17 in der hochgeschwenkten Stellung zurückgefahren. Zu diesem Zweck ist ein nur strichpunktiert angedeuteter Steuerketten-Nebenantrieb 69 mit einem waagerechten Kettentrum 71 im Bereich des hochgeschwenkten Schlittens angeordnet, so daß ein Mitnehmerzapfen oder Mitnehmerblock 70 in Eingriff mit der Schwenkgabel 22 am Schlitten 17 gelangen kann. Da sich das Kettentrum 71 bei einer Drehung des Antriebsmotors im Uhrzeigersinn nach rechts bewegt, wird dadurch der Werkzeugschlitten 17 aus dem Bereich der Werkzeugaufnahme 1 nach rechts heraus gezogen. In dieser Stellung kann der Werkzeugschlitten 17 verharren, bis der Bearbeitungsvorgang mit dem Werkzeug 2 beendet ist oder kann durch eine Drehrichtungsumkehr des Antriebsmotors 34 in eine Wartestellung herab geschwenkt werden.

Während der Werkzeugschlitten 17 in Wartestellung auf die Zurücknahme des nicht mehr gebrauchten Werkzeugs 2 wartet, entnimmt der Werkzeugroboter 10, der in alle drei Achsenrichtungen verfahrbar ist, das nächste benötigte Werkzeug 2 aus dem Hochregal-Werkzeugmagazin 11 und übergibt es an den Werkzeughalter 20 des zweiten am Querverschiebwagen 12 befestigten Werkzeugschlittens 17.

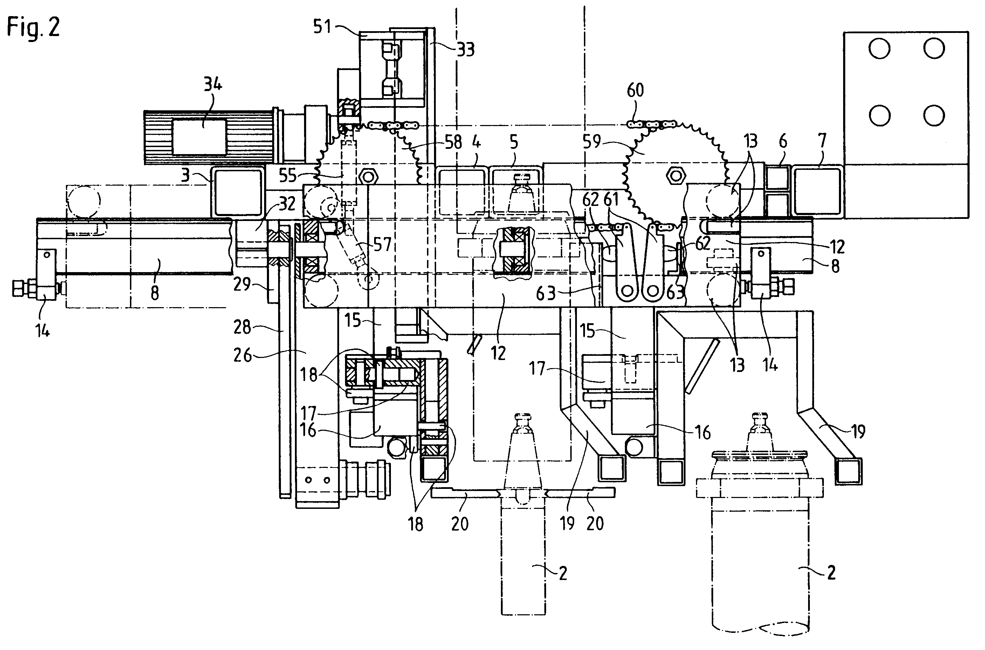

Um das nicht mehr benötigte Werkzeug 2 aus dem Werkzeughalter 1 zu entnehmen, wird der Werkzeugschlitten 17 wieder vorgefahren, die Verspannung des Werkzeugs 2 im Werkzeughalter 1 wird gelöst und der Werkzeugschlitten 17 wird durch Bewegungsumkehr des Antriebsmotors 34 herabgeschwenkt, bis das Führungsschienenteil 25 wieder mit der Führungsschiene 16 fluchtet. Daraufhin wird der Werkzeugschlitten 17 durch eine weitere Drehbewegung des Antriebsmotors 34 in die in Fig. 3 dargestellte Stellung zurückgefahren. Durch eine weitere Drehung des Antriebsmotors 34 entgegengesetzt zum Uhrzeigersinn gelangt der Mitnehmerblock 49 in Eingriff mit der Schwenkgabel 22 am Klinkenschlitten 56 und bewegt diesen nach oben. Dadurch wird, wie aus Fig. 2 ersichtlich, das Kettenrad 58 im Uhrzeigersinn in Drehung versetzt. Dies bewirkt, daß der Querverschiebewagen 12 nach links bewegt wird. Um zu erreichen, daß sich der Klinkenschlitten 56 in jeder Endstellung des Querverschiebewagen 12 in der in Fig. 3 dargestellten Stellung befindet, wird die Drehrichtung des Antriebsmotors 34 genau dann umgekehrt, wenn sich der Klinkenschlitten 56 in seiner oberen Stellung und damit die Kuppelstange 57 im Totpunkt befindet. Durch den Hub, den der Querverschiebewagen 12 erhält, gleitet er über diesen Totpunkt hinaus, so daß durch eine Bewegungsumkehr des Klinkenschlittens 56 die Weiterbewegung des Querverschiebewagens 12 bis zur Berührung mit dem linken Anschlag 14 erfolgt, wobei sich der Klinkenschlitten 56 dann wieder in seiner unteren Stellung befindet, die Kuppelstange 57 jedoch, wie strichpunktiert angedeutet, zur rechten Seite ausgeschwenkt ist. Auf diese Weise läßt sich mit dem Hub des Klinkenschlittens 56 der doppelte Querverschiebeweg des Querverschiebewagens 12 erreichen, wobei sich nach Beendigung der Querverschiebung, unabhängig davon, welcher der beiden Werkzeugschlitten 17 fluchtend zum Führungsschienenteil 25 verschoben ist, die erneute Verschiebung eines Werkzeugschlittens 17 von der Führungsschiene 16 auf das Führungsschienenteil 25 unmittelbar anschließen kann.

Es ergibt sich somit, das mit nur einem Antriebsmotor und damit gekuppelten Steuerketten ein zwangsläufiger Bewegungsablauf der Werkzeugübergabeeinheit erreichbar ist, der aufgrund der geringen bewegten Massen sehr schnell ablaufen kann, so daß sich bei Verwendung in Verbindung mit einer kombinierten Senkrechtdrehmaschine und Fräsmaschine eine Verkürzung der Werkzeugwechselzeit von üblichen fünfundvierzig Sekunden auf etwa fünfzehn Sekunden mit der erfindungsgemäßen Werkzeugübergabeeinheit erreichen läßt.

## Patentansprüche

1. Flexibles Fertigungssystem mit einer Werkzeugmaschine, einem zur Werkzeugmaschine benachbarten Hochregal-Werkzeugmagazin, einem ein Werkzeug aus dem Hochregal-Werkzeugmagazin entnehmenden und dahin zurücklegenden Werkzeugroboter und einer Werkzeugwechselvorrichtung mit einem vom Übergabebereich des Werkzeugroboters bis zur Werkzeugaufnahme der Werkzeugmaschine bewegbaren Werkzeughalter, **dadurch gekennzeichnet,** daß die Werkzeugwechselvorrichtung aus zwei im Bereich des Werkzeugroboters (10) quer verschiebbaren Werkzeugschlitten (17) und einem Werkzeughalter (20) für ein Werkzeug (2) an jedem Werkzeugschlitten (17) besteht.

2. Flexibles Fertigungssystem nach Anspruch 1, **gekennzeichnet durch** wenigstens einen endlos umlaufenden Steuerkettentrieb (34, 36, 37) für wenigstens einen von den beiden, mit dem Steuerkettentrieb kuppelbaren, von einer Werkzeugaufnahmeund -abgabestellung im Bereich des Werkzeugmagazins (11) in eine Werkzeugaufnahme (1) an einer Werkzeugmaschine auf Führungsschienen (16, 25) verfahrbaren Werkzeugschlitten (17) mit dem Werkzeughalter (20) und Mitnehmer (47, 48, 49) am Steuerkettentrieb (34, 36, 37) sowie mit den Mitnehmern zusammenwirkende in den Endstellungen des jeweils von dem Steuerkettenantrieb bewegten Werkzeugschlittens (17) auskuppelnde und verriegelnde sowie in der Transportstellung einkuppelnde Kupplungs- und Verriegelungsmittel (21, 22, 23) an den Schlitten (17).

3. Flexibles Fertigungssystem nach Anspruch 2, **dadurch gekennzeichnet,** daß die Mitnehmer am Steuerkettentrieb (34, 36, 37) aus seitlich oder senkrecht vorstehenden Zapfen oder Blöcken (47, 48, 49) und die Kupplungs- und Verriegelungsmittel aus an den Werkzeugschlitten (17) angelenkten Schwenkgabeln (21) mit einem quer angeordneten, in den Endstellungen der Werkzeugschlitten einseitig in eine Verriegelungsraste (24, 50) an der Führungsschiene einfallenden und sich dabei vom Steuerkettentrieb auskuppelnden sowie in der Transportstellung der Werkzeugschlitten beidseitig auf der Führungsschiene im wesentlichen spielfrei abstützenden Verriegelungsarmpaaren (22) bestehen.

4. Flexibles Fertigungssystem nach Anspruch 2 oder 3, **dadurch gekennzeichnet,** daß der Steuerkettentrieb (34, 36, 37) ein waagerechtes, zur Führungsschiene für die Werkzeugschlitten (17) mit den Werkzeughaltern (20) paralleles Kettentrum (45) und ein senkrechtes, mit wenigstens einem weiteren mit einem Lenkerparallelogramm (26, 28) für die Werkzeugschlitten (17) mit den Werkzeughaltern (20) zusammenwirkende Klinkenschlitten (51) kuppelbares Kettentrum (46) aufweist.

5. Flexibles Fertigungssystem nach Anspruch 4, **dadurch gekennzeichnet,** das das Lenkerparallelogramm aus zwei parallelen, einerseits schwenkbar an ortsfesten Trägern (3, 9, 31, 32) und andererseits an einem Führungsschienenteil (25) angelenkten Hebeln (26, 28) besteht, wovon wenigstens ein Hebel (26) über einen Winkelarm (27) und eine Kuppelstange (55) mit dem weiteren, senkrecht verschiebbaren Klinkenschlitten (51) gekuppelt ist.

6. Flexibles Fertigungssystem nach Anspruch 5, **dadurch gekennzeichnet,** daß beide Hebel (26, 28) im Bereich der ortsfesten Anlenkung parallele, mittels einer Kuppelstange (30) verbundene Winkelarme (27, 29) aufweisen.

7. Flexibles Fertigungssystem nach einem der Ansprüche 3 bis 6, **gekennzeichnet durch** einen weiteren, endlos umlaufenden, mit dem ersten gekuppelten Steuerkettentrieb (35, 39) mit einem waagerechten, mit den Werkzeugschlitten (17) mit den Werkzeughaltern (20) in der Werkzeugabgabe- und -aufnahmestellung im Bereich der Werkzeugaufnahme an der Werkzeugmaschine kuppelbaren Kettentrum (71).

8. Flexibles Fertigungssystem nach einem der Ansprüche 3 bis 7 **dadurch gekennzeichnet,** daß die zwei parallelen Werkzeugschlitten (17) mit je einem Werkzeughalter (20) auf Führungsschienen (16) verfahrbar sind, eine gemeinsame Querführung (8) für beide Werkzeugschlitten (17) mit ihren Führungsschienen (16) vorhanden ist und ein senkrecht geführter, mit dem senkrechten Kettentrum (46) kuppelbarer und mit den beiden Werkzeugschlitten (17) und ihren Führungsschienen (16) und mit die senkrechte Schlittenbewegung in eine waagerechte Bewegung der beiden Schlitten (17) mit ihren Führungsschienen (16) umlenkenden Kupplungsmitteln (57, 58, 59, 60) verbundener zusätzlicher Werkzeugschlitten (56) vorgesehen ist.

9. Flexibles Fertigungssystem nach Anspruch 8, **dadurch gekennzeichnet,** daß die Kupplungsmittel aus einem parallel zur Querführung (8) angeordneten, mit dieser verbundenen, über zwei parallele Kettenräder (58, 59) geführten Steuerkettentrieb (60) und einer einerseits an einem Kettenrad (58) und andererseits am zusätzlichen Klinkenschlitten (56) angreifenden Kuppelstange (57) bestehen.

10. Flexibles Fertigungssystem nach Anspruch 9, **dadurch gekennzeichnet,** daß die Kuppelstange (57) unter einem solchen Winkel an dem Kettenrad (58) angelenkt ist, daß dieses bei einer Auf- und Abbewegung des zusätzlichen Klinkenschlittens (56) mit der Kuppelstange einen Totpunkt durchläuft und sich dabei um insgesamt mindestens 180° dreht.

11. Verfahren zum Werkzeugwechseln im flexiblen Fertigungssystem der vorhergehenden Ansprüche, **dadurch gekennzeichnet,** daß die Mitnehmer (47, 48 49, 70) an den Steuerkettentrieben (34, 35, 36, 37, 69) so angeordnet und beabstandet sind, daß ein Werkzeugaufnahme- und -abgabezyklus, ausgehend von der Werkzeugaufnahme- und -abgabestellung im Bereich des Werkzeugmagazins (11) in folgenden Schritten abläuft:
- Vorfahren des Werkzeugschlittens (17) mit einem im Werkzeughalter (20) aufgenommenen neuen Werkzeug (2) auf das Führungsschienenteil (25) des Lenkerparallelogramms (26, 28),
- Hochschwenken des Werkzeugschlittens (17) mit dem Werkzeughalter (20) mittels des Lenkerparallelogramms (26, 28) und Einsetzen des Werkzeugs (2) in die Werkzeugaufnahme (1) der Werkzeugmaschine,
- Zurückfahren des Werkzeugschlittens (17) auf dem Führungsschienenteil (25) in der oberen Stellung des Lenkerparallelogramms (26, 28) nach Festklemmen des Werkzeugs (2),
- Herabschwenken des Lenkerparallelogramms (26, 28) mit dem Werkzeugschlitten (17) in eine Wartestellung,
- Hochschwenken des Lenkerparallelogramms (26, 28) mit dem Werkzeugschlitten (17) mit dem Werkzeughalter (20),
- Vorfahren des Werkzeugschlittens (17) auf dem Führungsschienenteil (25) in der oberen Stellung des Lenkerparallelogramms (26, 28) und Übernahme des gebrauchten Werkzeugs (2),
- Herabschwenken des Lenkerparallelogramms (26, 28) mit dem Werkzeugschlitten (17) und dem gebrauchten Werkzeug (2) bis zum Fluchten mit der Führungsschiene (16) an der Querführung (8),
- Zurückfahren des Werkzeugschlittens (17) mit dem gebrauchten Werkzeug (2) vom Führungsschienenteil (25) des Lenkerparallelogramms (26, 28) auf die Führungsschiene (16) an der Querführung (8),
- Querverfahren der beiden Werkzeugschlitten (17) an der Querführung (8) bis zum Fluchten eines Werkzeugschlittens (17) mit einem neuem Werkzeug (2) mit dem Führungsschienenteil (25) des Lenkerparallelogramms (26, 28).

## Claims

1. A flexible production system with a machine tool, a high shelf tool magazine adjacent the machine tool, a tool robot which withdraws a tool from the high shelf tool magazine and returns it thereto and a tool changing device with a tool holder adapted for movement from the transfer zone of the tool robot to the tool housing in the machine tool, characterised in that the tool changing device consists of two tool slides (17) adapted for transverse displacement in the region of the tool robot (10) and a tool holder (20) for a tool (2) on each tool slide (17).

2. A flexible production system according to claim 1, characterised by at least one endlessly revolving control chain transmission (34, 36, 37) for at least one of the two tool slides (17) with the tool holder (20) adapted to be coupled to the control chain transmission and to be moved on guide rails (16, 25) from a tool collection and delivery position in the region of the tool magazine (11) into a tool housing (1) on a machine tool and entraining means (47, 48, 49) on the control chain transmission (34, 36, 37) and with, co-operating with the entraining means, coupling and locking means (21, 22, 23) which, in the extreme positions of whichever tool slide (17) is being moved by the control chain transmission, uncouples and locks and couples up in the transport position.

3. A flexible production system according to claim 2, characterised in that the entraining means on the control chain transmission (34, 36, 37) consist of laterally or perpendicularly projecting studs or blocks (47, 48, 49) and the coupling and locking means consist of pivot forks (21) articulated on the tool slides (17) with a transversely disposed pair (22) of locking arms braced substantially without clearance on both sides on the guide rail in the transport position of the tool slides and, in the extreme positions of the tool slides, engaging on one side a locking catch (24, 50) on the guide rail, becoming thereby uncoupled from the control chain transmission.

4. A flexible production system according to claim 2 or 3, characterised in that the control chain transmission (34, 36, 37) comprises a horizontal chain strand (45) parallel with the guide rail for the tool slides (17) with the tool holders (20) and a vertical chain strand (46) adapted to be coupled to at least one further pawl slide (51) co-operating with a parallelogram linkage (26, 28) for the tool slides (17) with the tool holders (20).

5. A flexible production system according to claim 4, characterised in that the parallelogram linkage consists of two parallel levers (26, 28) pivotable at one end on stationary carriers (3, 9, 31, 32) and at the other on a guide rail part (25), of which at least one lever (36) is coupled via an angle arm (27) and a coupling rod (55) to a further perpendicularly displaceable pawl slide (51).

6. A flexible production system according to claim 5, characterised in that both levers (26, 28) have in the region of the stationary articulation parallel angle arms (27, 29) which are connected by means of a coupling rod (30).

7. A flexible production system according to one of claims 3 to 6, characterised by a further endlessly revolving control chain transmission (35, 39) coupled to the first one and having a horizontal chain strand (71) adapted to be coupled to the tool slides (17) with the tool holders (20) in the tool delivery and collection position in the region of the tool housing on the machine tool.

8. A flexible production system according to one of claims 3 to 7, characterised in that the two parallel tool slides (17), each with a tool holder (20), are adapted to travel on guide rails (16) and in that a common transverse guide (8) is provided for both tool slides (17) with their guide rails (16) and in that a vertically guided auxiliary tool slide (56) is provided which can be coupled to the vertical chain strand (46) and is connected to both tool slides (17) and their guide rails (16) and to coupling means (57, 58, 59, 60) which deflect the vertical slide movement into a horizontal movement of the two slides (17) with their guide rails (16).

9. A flexible production system according to claim 8, characterised in that the coupling means consist of, disposed parallel with and connected to the transverse guide (8), a control chain transmission (60) guided over two parallel chain wheels (58, 59) and a coupling rod (57) which at one end engages a chain wheel (58) and at the other engages the auxiliary pawl slide (56).

10. A flexible production system according to claim 9, characterised in that the coupling rod (57) is articulated on the chain wheel (58) at such an angle that upon an upwards and downwards movement of the auxiliary pawl slide (56) with the coupling rod, the chain wheel (58) passes through a dead centre position, rotating thereby through a total of at least 180°.

11. A method of tool changing in the flexible production system according to the preceding claims, characterised in that the entraining means (47, 48, 49, 70) on the control chain transmissions (34, 35, 36, 37, 69) are so disposed and spaced apart that a tool collection and delivery cycle starting from the tool collection and delivery position in the region of the tool magazine (11) takes place in the following stages:
- forward movements of the tool slide (17) with a new tool (2) accommodated in the tool holder (20) up to the guide rail part (25) of the parallelogram linkage (26, 28),
- upwards pivoting of the tool slide (17) with the tool holder (20) by means of the parallelogram linkage (26, 28) and insertion of the tool (2) into the tool housing (1) in the machine tool,
- reverse travel of the tool slide (17) on the guide rail part (25) in the upper position of the parallelogram linkage (26, 28) after the tool (2) has been rigidly clamped,
- downwards pivoting of the parallelogram linkage (26, 28) with the tool slides (17) into a waiting position,
- upwards pivoting of the parallelogram linkage (26, 28) with the tool slide (17) with the tool holder (20),
- forwards movement of the tool slides (17) on the guide rail part (25) in the upper position of the parallelogram linkage (26, 28) and take-over of the used tool (2),
- downwards pivoting of the parallelogram linkage (26, 28) with the tool slide (17) and the used tool (2) until it is aligned with the guide rail (16) on the transverse guide (8),
- return of the tool slide (17) with the used tool (2) from the guide rail part (25) of the parallelogram linkage (26, 28) to the guide rail (16) on the transverse guide (8),
- transverse travel of the two tool slides (17) on the transverse guide (8) until one tool slide (17) with a new tool (2) is in alignment with the guide rail part (25)of the parallelogram linkage (26, 28).

## Revendications

1. Système de fabrication flexible avec une machine-outil, un magasin à outils à étagère en hauteur voisin de la machine-outil, un robot à outils, prélevant un outil du magasin à outils à étagère en hauteur et le replaçant à l'intérieur et un dispositif de changement d'outil avec un porte-outil déplaçable de la zone de transfert du robot à outils au logement à outils de la machine-outil, caractérisé en ce que le dispositif de changement d'outil est constitué de deux chariots à outils (17), déplaçables transversalement dans la zone du robot à outils (10), et d'un porte-outil (20) destiné à un outil (2) sur chaque chariot à outil (17).

2. Système de fabrication flexible selon la revendication 1, caractérisé par au moins un entraînement à chaînes de commande (34, 36, 37) tournant de façon continue pour au moins l'un des deux chariots à outils (17) déplaçables sur une machine-outil sur des glissières de guidage (16, 25), pouvant être couplés à l'entraînement à chaînes de commande, depuis une position de réception et de dépose d'outil dans la zone du magasin à outils (11) dans un logement à outils (1) prévu sur la machine-outil, le porte-outil (20) et les organes d'entraînement (47, 48, 49) étant montés sur l'entraînement à chaînes de commande (34, 36, 37) ainsi que des moyens de couplage et de verrouillage (21, 22, 23) montés sur le chariot (17) et assurant un découplage et un verrouillage, ainsi qu'un couplage en position de transport, coopérant avec les organes d'entraînement dans les positions finales du chariot à outil (17) respectif déplacé par l'entraînement à chaînes de commande.

3. Système de fabrication flexible selon la revendication 2, caractérisé en ce que les organes d'entraînement sont montés sur l'entraînement à chaînes de commande (34, 36, 37) depuis des tenons ou blocs (47, 48, 49) faisant saillie latéralement ou perpendiculairement et les moyens d'accouplement et de verrouillage étant constitués de fourches pivotantes (21) articulées sur les chariots à outils (17) avec une paire de bras de verrouillage (22), disposés transversalement, venant s'introduire aux positions finales des chariots à outils d'un côté dans un cliquet de verrouillage (24, 50) ménagé sur la glissière de guidage et produisant alors un désaccouplement de l'entraînement à chaînes de commande ainsi que prenant appui pratiquement sans jeu sur la glissière de guidage, de part et d'autre, dans la position de transport des chariots à outils.

4. Système de fabrication flexible selon la revendication 2 ou 3, caractérisé en ce que l'entraînement à chaînes de commande (34, 36, 37) est un brin de chaîne (45) horizontal, parallèle à la glissière de guidage destinée au chariot à outil (17) équipé des porte-outils (20) et un brin de chaîne (46) vertical pouvant être couplé à au moins un chariot à cliquet (51) coopérant avec un parallélogramme à bras articulés (26, 28) destiné au chariot à outil (17) équipé des porte-outils (20).

5. Système de fabrication flexible selon la revendication 4, caractérisé en ce que le parallélogramme à bras articulés est constitué de deux leviers (26, 28) articulés, parallèles, pouvant pivoter d'un côté sur des supports (3, 9, 31, 32) localement fixes et articulés de l'autre côté à une partie de glissière de guidage (25), dont au moins un levier (26) est couplé par un bras en cornière (27) et une bielle (55) à l'autre chariot à cliquet (51) déplaçable verticalement.

6. Système de fabrication flexible selon la revendication 5, caractérisé en ce que les deux leviers (26, 28) présentent dans la zone de l'articulation localement fixe des bras coudés (27, 29), parallèles, reliés au moyen d'une bielle (30).

7. Système de fabrication flexible selon l'une des revendications 3 à 6, caractérisé par un autre entraînement à chaîne de commande (35, 39) tournant de façon continue, couplé au premier entraînement à chaîne de commande et équipé d'un brin de chaîne (71) horizontal, pouvant être accouplé au chariot à outil (17) portant les porte-outils (20) dans la position de dépose et de réception d'outils, dans la zone du logement d'outils sur la machine-outil.

8. Système de fabrication flexible selon l'une des revendications 3 à 7, caractérisé en ce que les deux chariots à outils (17) parallèles sont déplaçables, chacun avec un porte-outil (20), sur les glissières de guidage (16), un guidage transversal (8) commun étant prévu pour les deux chariots à outils (17) avec leurs glissières de guidage (16) et un chariot à outil (56) supplémentaire, guidé verticalement, relié d'une façon permettant un couplage, au brin de chaîne vertical (46) et aux deux chariots à outils (17) et leurs glissières de guidage (16) et à des moyens de couplage (57, 58, 59, 60) changeant le mouvement vertical du chariot en un mouvement horizontal des deux chariots (17) avec leurs glissières de guidage (16).

9. Système de fabrication flexible selon la revendication 8, caractérisé en ce que les moyens de couplage sont constitués de transmissions à chaînes de commande (60) disposées parallèlement au guidage transversal (8), reliées à celui-ci et guidées sur deux roues à chaîne (58, 59) parallèles, et d'une bielle (57) agissant d'un côté sur une roue à chaîne (58) et de l'autre côté sur un chariot à cliquet (56) supplémentaire.

10. Système de fabrication flexible selon la revendication 9, caractérisé en ce que la bielle (57) est articulée sur la roue à chaîne (58) sous un angle tel que cette roue à chaîne tourne globalement au moins de 180° lors d'un mouvement de montée et de descente du chariot à chaîne (56) supplémentaire en passant sur un point mort avec la bielle.

11. Procédé de changement d'outils dans un système de fabrication flexible selon la revendication précédente, caractérisé en ce que les organes d'entraînement (47, 48, 49, 70) sont disposés sur les entraînements à chaînes de commande (34, 35, 36, 37, 69) de manière et à une distance telle qu'un cycle de réception et de dépose d'outil, en partant de la position de réception et de dépose d'outil, se déroule dans la zone du magasin à outils (11) en suivant les étapes ci-après :
- avancement du chariot à outil (17) avec un nouvel outil (2) logé dans le porte-outil (20), sur la partie de glissière de guidage (25) du parallélogramme à bras articulés (26, 28),
- levée par pivotement du chariot à outil (17) avec le porte-outil (20) au moyen du parallélogramme à bras articulés (26, 28) et insertion de l'outil (2) dans le logement à outils (1) de la machine-outil,
- rétraction du chariot à outil (17) sur la partie de glissière de guidage (25) dans la position supérieure du parallélogramme à bras articulés (26, 28) après blocage par serrage de l'outil (2),
- abaissement par pivotement du parallélogramme à bras articulés (26, 28) avec le chariot à outil (17) dans une position d'attente,
- levée par pivotement du parallélogramme à bras articulés (26, 28) avec le chariot à outil (17) avec le porte-outil (20),
- avancement du chariot porte-outil (17) sur la partie de glissière de guidage (25) dans la position supérieure du parallélogramme à bras articulés (26, 28) et transfert de l'outil (2) utilisé,
- abaissement par pivotement du parallélogramme à bras articulés (26, 28) avec le chariot à outil (17) et l'outil (2) usagé, jusqu'à venir en alignement avec la glissière de guidage (16) sur le guidage transversal (8),
- rétraction du chariot à outil (17) avec l'outil (2) usagé de la partie de glissière de guidage (25) du parallélogramme à bras articulés (26, 28) sur la glissière de guidage (16) montée sur le guidage transversal (8),
- déplacement transversal de deux chariots à outils (17) sur le guidage transversal (8), jusqu'à venir en alignement d'un chariot à outil (17) équipé d'un nouvel outil (2) avec la partie à glissière de guidage (25) du parallélogramme à bras articulés (26, 28).
